# EUROPEAN PATENT SPECIFICATION

(11) **EP 1 667 379 B1**
(45) Date of publication and mention of the grant of the patent: **26.03.2014**
(21) Application number: 04773117.9
(22) Date of filing: 15.09.2004
(51) Int. Cl.: H04L 12/46

(54) **AN INFORMATION PROCESSOR FOR CONNECTING TO ANY OF MULTIPLE NETWORKS, A PROGRAM, AND A CONTROL METHOD**
INFORMATIONSPROZESSOR ZUM VERBINDEN MIT EINEM VON MEHREREN NETZWERKEN, PROGRAMM UND STEUERVERFAHREN
PROCESSEUR D'INFORMATION POUR CONNECTER À UN DE PLUSIEUR RÉSEAUX, LOGICIEL ET PROCÉDÉ DE CONTRÔL

(30) Priority: 18.09.2003 JP 2003326469
(43) Date of publication of application: 07.06.2006
(73) Proprietor: Lenovo (Singapore) Pte. Ltd., Singapore 556741 (SG)
(72) Inventor: HATORI, Masahiko, IBM Japan Ltd., Yamato-shi, Kanagawa 242-8502 (JP); KATSUNO, Yasuharu, IBM Japan Ltd., Yamato-shi, Kanagawa 242-8502 (JP); ALONE, Vijay, B-503 VANRAJI MIT College Road, Pune 411038 (IN); AIHARA, Toru, IBM Japan Ltd., Yamato-shi, Kanagawa 242-8502 (JP)
(74) Representative: Schäfer, Horst
(86) International application number: PCT/JP2004/013457
(87) International publication number: WO 2005/029783

(56) References cited:
- JP-A- 2000 013 823
- JP-A- 2002 135 289
- JP-A- 2002 261 857
- JP-A- 2002 290 445
- JP-A- 2003 091 467
- ANTHONY MCAULEY SUBIR DAS TELCORDIA TECHNOLOGIES SHINICHI BABA YASURO SHOBATAKE TOSHIBA AMERICA RESEARCH INC: "Dynamic Registration and Configuration Protocol (DRCP); draft-itsumo-drcp-00.txt" IETF STANDARD-WORKING-DRAFT, INTERNET ENGINEERING TASK FORCE, IETF, CH, 1 October 1999 (1999-10-01), XP015030338 ISSN: 0000-0004

## Description

### Technical Filed

The present invention relates to an information processor, a program, a recording medium and a control method. In particular, the present invention relates to an information processor which switches network-related settings, a program, a recording medium and a control method.

### Background Art

Recently, with the spread of wireless network technology, wireless network access points have been provided not only in offices and homes but also on streets or in restaurants. Therefore, a user can perform communication at various places even when he is carrying a mobile communication terminal. There has been proposed a technique for changing network-related settings based on an SSID (Service Set ID) specified for the access point to communicate with (see Patent Document 1).

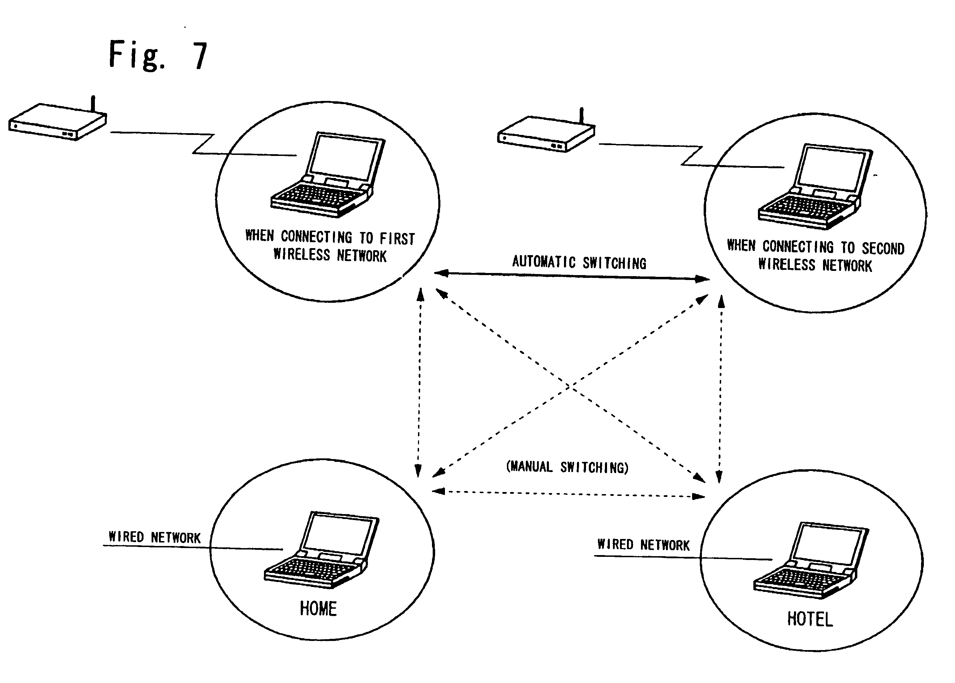

Figure 7 is a diagram illustrating switching among networks. The access point which an information processor 10 communicates with is different in the case of connecting to a first wireless network and in the case of connecting to a second wireless network, and the SSID is also different. Thus, according to the prior-art technique, the information processor 10 can automatically change network-related settings based on the SSID. Thereby, a user is not required to perform troublesome setting work even when he has changed the access point to connect to.

Patent Document 1: Published Unexamined Patent Application No. 2003-91467

The article "Dynamic Registration and Configuration Protocol (DRCP)" by Anthony McAuley, Subir Das, Telcordia Technologies ,Shinichi Baba, Yasuro Shobatake, Toshiba America Research Inc., IETF STANDARD-WORKING-DRAFT, 19991001 INTERNET ENGINEERING TASK FORCE, IETF, CH discloses a version of the Dynamic Host Configuration Protocol (DHCP) for roaming users.

JP 2003-091467 discloses a network connection system with a location profile for storing adapter information being physical switching information corresponding to location information and network setting information being logical switching information corresponding to the adapter information each time a plurality of networks are respectively connected, an adapter switching device for acquiring the adapter information from the location profile based on the designation of location received from a user, and for switching an adapter, and a network setting switching device for acquiring the network setting information from the location profile based on the designation of the accepted location, and for switching network setting.

### Disclosure of the Invention

### Problems to be Solved by the Invention

However, since each of a wired network and a wireless network has its own advantages, a user may want to connect not only to a

wireless network but also to a wired network from the same mobile communication terminal. For example, when a wireless network is used, it is very convenient in that cable lying is not required. Meanwhile, when a wired network is used, it is advantageous in that faster and more stable communication can be performed in comparison with the case of using a wireless network.

Heretofore, when the communication destination is changed from a wireless network to a wired network or vice versa, or when the communication destination is changed between wired networks, it is required to manually make network settings for the information processor 10, as shown in Figure 7, and this is very inconvenient. Furthermore, in a wireless network, the same SSID may be used by multiple access points. Therefore, in the case of a system using an SSID, it may not be appropriately detected that the connected has been changed.

Accordingly, the object of the present invention is to provide an information processor capable of solving the above problem, a program, a recording medium and a control method. This object is achieved by combination of characteristics described in independent Claims in the Claims. Dependent Claims specify further advantageous and concrete examples of the present invention.

### Means for Solving the Problems

The object is achieved by an information processor according to claim 1, a program according to independent claim 12, and a control method according to independent claim 16.

### Advantages of the Invention

According to the present invention, irrespective of whether the connection destination is a wired network or a wireless network, it is possible to change settings based on the connected network.

### Brief Description of the Drawings

Figure 1 is a diagram showing the outline of a network 50 to which an information processor 10 is connected;
Figure 2 shows a block diagram of the information processor 10;
Figure 3 shows an example of the data structure of a location profile DB 155;
Figure 4 shows an operational flow of processing of the information processor 10 setting setting information;
Figure 5 shows an example of processing of acquiring device identification information at S430 in Figure 4;
Figure 6 shows an example of the hardware configuration of the information processor 10; and
Figure 7 is a diagram illustrating switching among networks.

### Best Mode of the Invention

The present invention will be described below through an embodiment of the invention. The embodiment described below, however, does not limit the invention to the Claims, and all the combinations of characteristics described in the embodiment is not necessarily required for solution means of the invention.

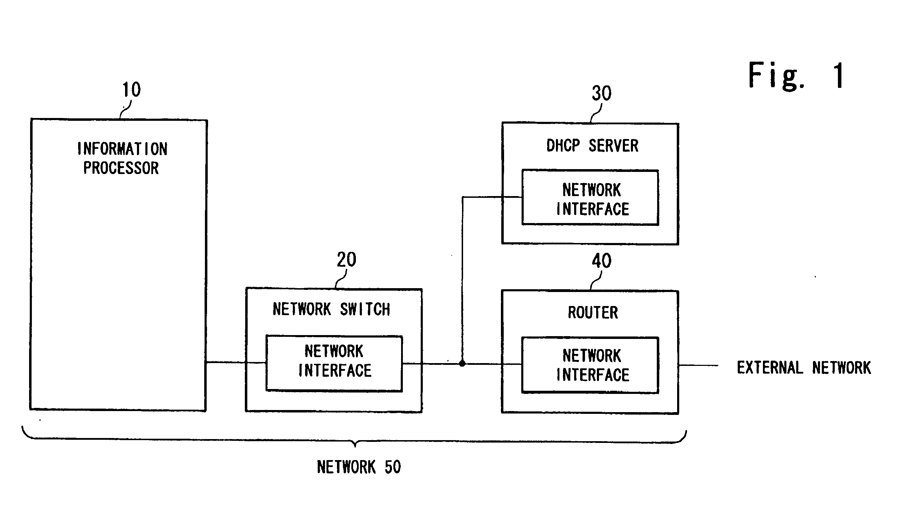

Figure 1 is a diagram showing the outline of a network 50 to which an information processor 10 is connected. The information processor 10 is connected to network devices such as a network switch 20, a DHCP server 30 and a router 40 via a network 50. The information processor 10 is intended to detect which network it has connected by acquiring device identification information about the network devices connected to the network 50, for example, the network switch 20, the DHCP server 30 or the router 40 and perform network settings suitable for the connected network.

The information processor 10 is, for example, a mobile communication terminal such as a notebook personal computer and a PDA (personal digital assistant), and performs communication by connecting to any of multiple networks. The network switch 20 controls communication routes among network devices with the use of MAC addresses, device identification information specific to the network devices. The DHCP server 30 is an example of an assignment server according to the present invention. It assigns to a device newly connected to the network 50 an IP address for identifying the device within the network 50.

For example, if the information processor 10 is newly connected to the network 50 in the figure, the DHCP server 30 sets the information processor 10 to be in a communicable condition by assigning an IP address to the information processor 10. Here, the assignment server according to the present invention is not limited to a DHCP server, and it may be a DHCP relay server for relaying communication between the DHCP server and the information processor 10. The router 40 relays communication between the network 50 shown in the figure and an external network.

In the figure, the information processor 10 can communicate with any of the network switch 20, the DHCP server 30 and the router 40. Therefore, if the information processor 10 can acquire the MAC address of any one of the network switch 20, the DHCP server 30 and the router 40, it can identify the connected network 50 based on the MAC address. However, some networks may not be provided with at least one of the network switch 20, the DHCP server 30 and the router 40. For example, the network switch 20 is often not provided for a relatively small-sized network.

Even in such a case, the information processor 10 attempts to acquire the MAC address of each of the network switch 20, the DHCP server 30 and the router 40 in order to appropriately identify a connected network, and identifies the connected network based on any MAC address which can be acquired.

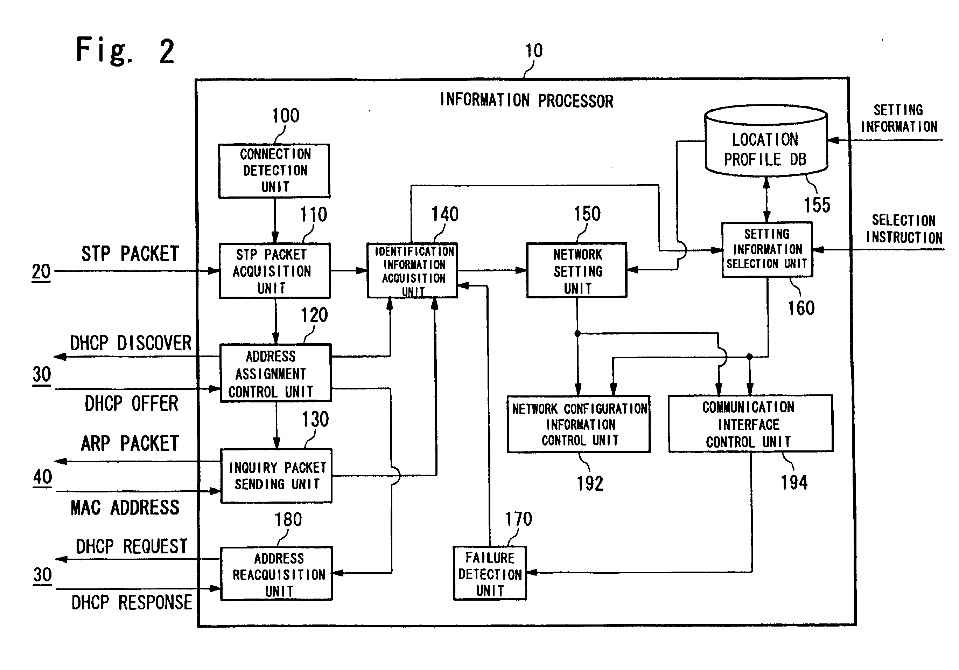

Figure 2 shows a block diagram of the information processor 10. The information processor 10 has a connection detection unit 100, an STP (Spanning Tree Protocol) packet acquisition unit 110 which is an example of a route setting packet acquisition unit, an address assignment control unit 120, an inquiry packet sending unit 130, an identification information acquisition unit 140 , a network setting unit 150, a location profile DB 155 which is an example of a setting information storage unit according to the present invention, a setting information selection unit 160, a failure detection unit 170, an address reacquisition unit 180, a network configuration information control unit 192 and a communication interface control unit 194.

The connection detection unit 100 detects that the information processor 10 has been connected to any network and sends notification to that effect to the STP packet acquisition unit 110. For example, the connection detection unit 100 may detect that a network cable for connecting to a network for communication has been connected to the information processor 10 or detect connection by receiving notification from a network adapter.

A network is a LAN (local area network) or a subnet, for example, and it means a range in which communication is possible without relay by a router . A network may be a broadcast domain to which a broadcast packet can reach. As an example, a network may be an Ethernet (registered trademark) orTokenRing (registered trademark) network, or it may be a wired network or a wireless network. Multiple networks mean multiple networks wherein devices that can make communication without relay by a router are not overlapped with one another.

If connection to a network is detected by the connection detection unit 100, the STP packet acquisition unit 110 acquires an STP packet from a network device connected to the network to which the information processor 10 has been connected and sends it to the identification information acquisition unit 140. If the STP packet acquisition unit 110 cannot acquire the STP packet, then it sends notification to that effect to the address assignment control unit 120. Here, the STP (Spanning Tree Protocol) packet is an example of a route setting packet for setting a route to be used by the network switch 20 to communicate with another device, which is sent by the network switch 20 and is a packet, for example, for configuring a communication route without circulation in the network to which the information processor 10 is connected.

The route setting packet according to the present invention is not limited to an STP packet. For example, the route setting packet may be an OSPF (Open Shortest Path First) packet for searching for the shortest route to a communication destination, an HSRP (Cisco Hot Standby Router Protocol) packet for selecting a suitable communication route from amongmultiplexed communication routes when a failure occurs, or a packet related to a BSSID (Basic Service Set Identifier).

If the address assignment control unit 120 cannot acquire an STP packet, it sends a DHCP (Dynamic Host Configuration Protocol) DISCOVER packet which is an example of an assignment server detection packet, to at least one network device connected to the network to which the information processor 10 is connected. For example, the address assignment control unit 120 may broadcast a DHCP DISCOVER packet to all the network devices of the network to which the information processor 10 is connected.

Then, the address assignment control unit 120 acquires a DHCP OFFER packet which is an example of an offer packet indicating that an IP address can be provided, from the DHCP server 30, and sends it to the identification information acquisition unit 140. Instead, the address assignment control unit 120 may send a DHCP DISCOVER packet irrespective of whether or not it could acquire an STP packet, and send an acquired DHCPOFFER packet to the identification information acquisition unit 140.

On the other hand, if the address assignment control unit 120 cannot acquire a DHCP OFFER packet, it sends notification to that effect to the inquiry packet sending unit 130. Furthermore, the address assignment control unit 120 sends information indicating whether or not an IP address has been assigned from the DHCP server 30, to the address reacquisition unit 180.

If the inquiry packet sending unit 130 cannot acquire a DHCP OFFER packet, then it sends an ARP packet for inquiring about the MAC (Media Access Control) address of the network device, to at least one network device connected to the network. For example, the inquiry packet sending unit 130 inquires, based on the preset IP address of the router 40, about a MAC address corresponding to the IP address. Here, an ARP packet is a packet for inquiring about a MAC address corresponding to an IP address in the ARP (Address Resolution Protocol) protocol.

Then, the inquiry packet sendingunit 130 acquires the MAC address of the router 40 as a response to the ARP packet and sends it to the identification information acquisition unit 140. Instead, the inquiry packet sending unit 130 may send an ARP packet irrespective of whether or not it was able to acquire a DHCP OFFER packet.

From at least one of multiple network devices in the network to which the information processor 10 is connected, the identification information acquisition unit 140 acquires a MAC address which identifies the network device, via the STP packet acquisition unit 110, the address assignment control unit 120 and the inquiry packet sending unit 130. Then, the identification information acquisition unit 140 sends the acquired MAC address to the network setting unit 150 and the setting information selection unit 160.

For each of multiple networks, the location profile DB 155 stores setting information indicating network settings to be set for the information processor 10 in the case of performing communication via the network, in association with MAC addresses identifying network devices connected to the network. The location profile DB 155 may acquire the setting information indicating network settings by causing a user to input it. In this case, the location profile DB 155 may store the acquired setting information without associating it with MAC (Media Access Control) addresses.

The network setting unit 150 acquires setting information associated with the MAC address acquired from at least one of the multiple network devices, from the location profile DB 155, and sets it for the network configuration information control unit 192 or the communication interface control unit 194. Thereby, the information processor 10 starts communication with another device based on the settings. If a failure is detected by the failure detection unit 170, the network setting unit 150 selects setting information associated with a MAC address acquired from another network device in the network to which the information processor 10 is connected, from the location profile DB 155 and sets the setting information.

The setting information selection unit 160 selects setting information to be set for the information processor 10 from among the setting information stored in the location profile DB 155, based on a selection instruction obtained from a user, and sets the setting information for the network configuration information control unit 192 or the communication interface control unit 194. Thus, the information processor 10 can also accept manual setting by a user when connection is made to a network other than networks which it has connected before.

When detecting a communication failure in the communication interface control unit 194 which performs communication based on setting information, the failure detection unit 170 sends notification to that effect to the identification information acquisition unit 140. If the address assignment control unit 120 acquires a DHCP (Dynamic Host Configuration Protocol) OFFER packet and fails to acquire an IP address from the DHCP server 30, then the address reacquisition unit 180 sends a DHCPREQUEST packet, which is an IP address reacquisition request, to the DHCP server 30 before the operating system of the information processor 10 sends an IP address reacquisition request to the DHCP server 30.

As an example of the processing, the address reacquisition unit 180 may send a DHCP REQUEST packet to the DHCP server 30 by executing the "ipconfig/renew" command in the Windows (registered trademark) operating system. Then, the address reacquisition unit 180 acquires a DHCP RESPONSE packet which is notification to the effect that an IP address is to be assigned and sets the IP address indicated by the acquired DHCP RESPONSE packet for the information processor 10.

The network configuration information control unit 192 controls network configuration information based on the setting information set by the network setting unit 150 or the setting information selection unit 160. The communication interface control unit 194 controls a communication interface based on the setting information set by the network setting unit 150 or the setting information selection unit 160.

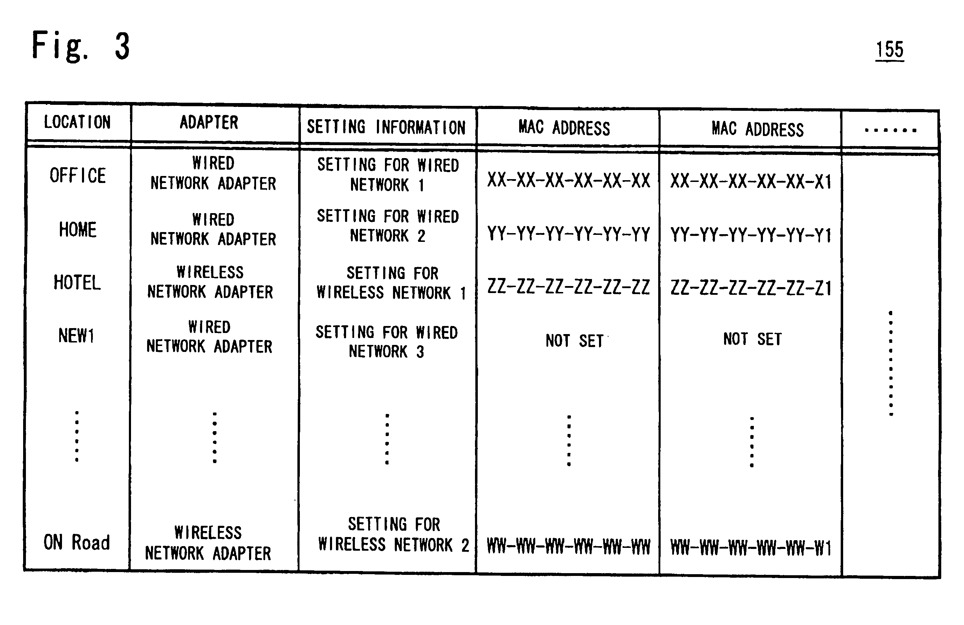

Figure 3 shows an example of the data structure of location profile information stored in the location profile DB 155. For each of the multiple networks, the location profile DB 155 stores setting information indicating network settings to be set for the information processor 10 in the case of performing communication via the network, in association with MAC addresses identifying network devices connected to the network.

Here, the setting information is, for example, parameters to be set for the network configuration information control unit 192 to control the operation of an application program or parameters to be set for the communication interface control unit 194 to control the operation of the network interface. More specifically, the setting information is information whether or not a DHCP function is used, the name of a DNS server, the SSID and the encryption method to be used in the case of connecting to a wireless network, the name of a proxy server used by browser software, information for controlling a firewall function, information about whether a printer and files are to be shared with other devices, settings for a printer, programs to be activated when connection is made to a network, settings for a VPN program or the like.

A MAC address is an abbreviation of a Media Access Control address, which is specified for each network device connected to a computer network and is a value of six bytes specific to the network device. The device identification information according to the present invention is not limited to the MAC address, and any identification information specific to a network device may be used. For example, identification information specific to a wireless access point, such as a BSSID (Basic Service Set Identifier) and an ESSID (Extended Service Set Identifier) may be used.

More specifically, in the location profile DB 155, there are stored, in association with location information for identifying a network, a network adapter to be used in the case of connecting to the network, setting information to be set in the case of connecting to the network and the MAC address of each of network devices connected to the network.

As an example, setting information for the location information "OFFICE" is wired network settings 1. The MAC address of one network device in the network corresponding to the location information "OFFICE" , XX-XX-XX-XX-XX-XX, and the MAC address of another network device, XX-XX-XX-XX-XX-X1, are associated with the wired network settings 1.

In this example, if an acquired MAC address is any of XX-XX-XX-XX-XX-XX and XX-XX-XX-XX-XX-X1, then the network setting unit 150 sets the wired network settings 1 associated with the location information "OFFICE" for the network configuration information control unit 192 or the communication interface control unit 194. Thereby, it is possible to select appropriate setting information without performing processing such as displaying a list of location profile information for a user to cause the user to select any location profile information therefrom.

When newly accepting input of setting information from a user, the location profile DB 155 may store the setting information without associating it with MAC addresses, as shown in the location information "NEW1". In this case, the location profile DB 155 stores the setting information in association with a MAC address to be acquired by the identification information acquisition unit 140 when connection is made to the network next.

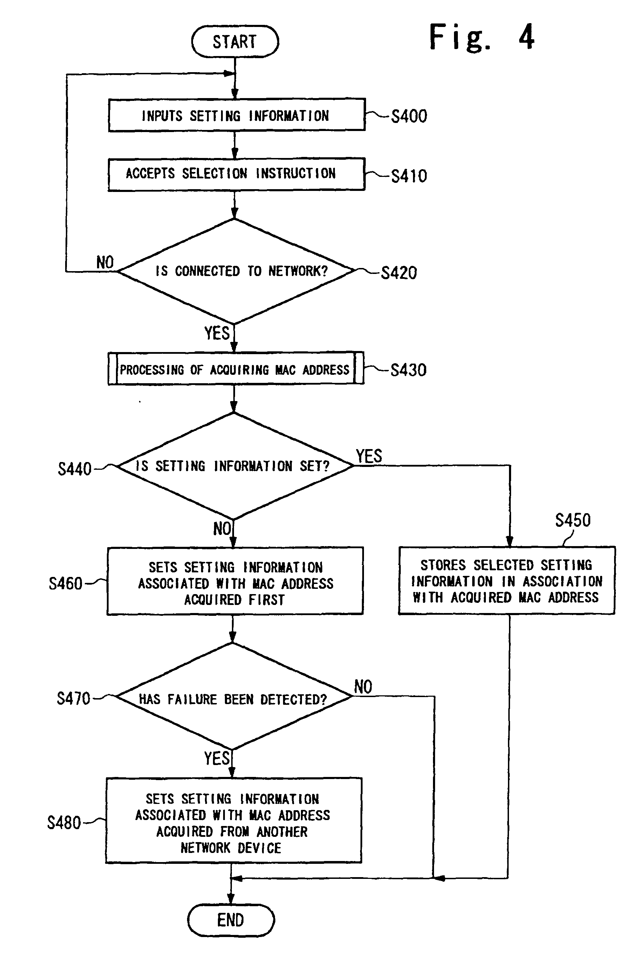

Figure 4 shows an operational flow of processing of the information processor 10 setting setting information. The location profile DB 155 causes a user to input setting information (S400) . When accepting a selection instruction from the user, the setting information selection unit 160 selects setting information to be set for the information processor 10 from among setting information stored in the location profile DB 155 based on the selection instruction and sets the setting information for the network configuration information control unit 192 or the communication interface control unit 194 (S410). If the connection detection unit 100 does not detect that connection has been made to a network (S420 : NO), then the information processor 10 returns the process to S400.

If the connection detection unit 100 detects that connection has been made to a network (S420: YES), then the identification information acquisition unit 140 acquires a MAC address from at least one of multiple network devices in the network to which the information processor 10 is connected, for example, the network switch 20, the DHCP server 30 and the router 40 (S430) . Instead, when the information processor 10 returns from a power-saving operation mode to a normal operation mode or when power is on for the information processor 10, the identification information acquisition unit 140 may acquire MAC addresses from the multiple network devices in the network to which the information processor 10 is connected.

If setting information has been set by the setting information selection unit 160 at S410 (S440: YES), the location profile DB 155 stores the setting information selected by the setting information selection unit 160 in association with a MAC address acquired by the identification information acquisition unit 140 (S450). For example, if the setting information selected by the setting information selection unit 160 is not associated with any MAC address, then the location profile DB 155 newly associates the MAC address with the setting information and stores it.

If the location profile DB 155 has already stored the setting information selected by the setting information selection unit 160 in association with a MAC address, then it further associates the setting information with the MAC address acquired by the identification information acquisition unit 140 and stores it. Alternatively, the location profile DB 155 may store the setting information in association with the MAC address acquired by the identification information acquisition unit 140 instead of the MAC address already stored in association with the setting information.

On the other hand, if setting information has not been set by the setting information selection unit 160 at S410 (S440: NO), then the network setting unit 150 sets the setting information associated with the MAC address acquired by the identification information acquisition unit 140 for the network configuration information control unit 192 or the communication interface control unit 194 (S460).

If the failure detection unit 170 detects a failure in communication using the setting information set by the network setting unit 150 or the setting information selection unit 160 (S470 : YES), then the network setting unit 150 may set setting information associated with a MAC address acquired from another network device in the connected network for the network configuration information control unit 192 or the communication interface control unit 194 (S480) . That is, if communication cannot be appropriately performed with the use of setting information associated with a MAC address acquired earliest, communication with the use of setting information associated with a MAC address acquired next is attempted. Thereby, even in the case where any change is made in the configuration of a network, such as the case where a MAC address acquired earliest and a MAC address acquired next are associated with different setting information, the possibility of performing appropriate communication can be enhanced.

The processing order in the procedure shown in the figure is only an example, and the information processor 10 may set setting information in a different order. For example, the location profile DB 155 may cause a user to input setting information after the information processor 10 is connected to a network. Then, the setting information selection unit 160 may acquire a selection instruction from the user after the information processor 10 is connected to the network. In this case, the identification information acquisition unit 140 may acquire a MAC address irrespective of whether or not the connection detection unit 100 has detected the connection to the network. The location profile DB 155 may store the inputted setting information in association with the acquired MAC address.

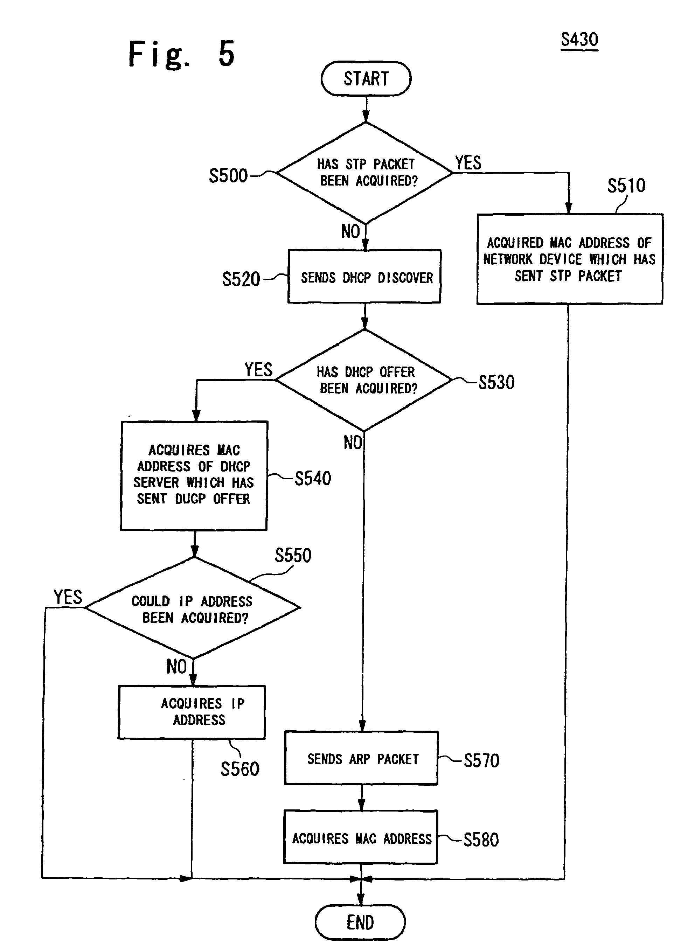

Figure 5 shows an example of processing of acquiring device identification information at S430 in Figure 4. If the STP (Spanning Tree Protocol) packet acquisition unit 110 acquires an STP packet from the network switch 20 (S500 : YES), the identification information acquisition unit 140 acquires a MAC address identifying the network device which has sent the STP packet from the STP packet (S510).

Here, an STP packet is a BPDU (Bridge Protocol Data Unit) packet periodically sent by the network switch 20 , which is a layer 2 switch, in order to prevent communication impossibility from being caused by circulation of communication among layer 2 switches. For example, the network switch 20 sends an STP packet including its MAC address to the devices within the network at a predetermined time interval, for example, every two seconds. By referring to the STP packet, the other devices within the network can detect that the network switch 20 is connected to the network and detect whether the network switch 20 is connected to a communication route reachable from any port of the other devices. Thereby, it is possible for a layer 2 switch such as the network switch 20 to appropriately detect the network structure and select a route without circulation to be used for communication. Furthermore, even when a new device is connected to the network or when a device is removed, it is possible to select a new communication route within a predetermined time, for example, within two seconds.

On the other hand, if the STP packet acquisition unit 110 fails in acquisition of an STPpacket (S500: NO), then the address assignment control unit 120 sends a DHCP DISCOVER packet for detecting the DHCP server 30 to all the network devices within the network to which the information processor 10 is connected (S520).

For example, if the STP packet acquisition unit 110 cannot receive an STP packet within a predetermined period of time, for example, within two seconds, it determines that acquisition of an STP packet has failed. That is, if a failure is temporarily caused in communication between the network switch 20 and the information processor 10, or if the network switch 20 is not connected to the network, then the information processor 10 terminates the processing of acquiring a MAC address from an STP packet and quickly proceeds to the next means.

If the address assignment control unit 120 can acquire a DHCP OFFER packet, which is a response to a DHCP DISCOVER packet, from the DHCP server 30 within a predetermined period of time after sending the DHCP DISCOVER packet (S530: YES), then the identification information acquisition unit 140 acquires the MAC address of the DHCP server 30 which has sent the DHCP OFFER packet from the DHCP OFFER packet acquired by the address assignment control unit 120 (S540) .

If the address reacquisition unit 180 fails in acquisition of an IP address from the DHCP server 30 (S550: NO), then it acquires an IP address by sending a DHCP REQUEST packet to the DHCP server 30 before the operating system of the information processor 10 sends an IP address reacquisition request to the DHCP server 30 (S560) .

For example, if an IP address has not been acquired from the DHCP server 30, an operating system such as Windows (registered trademark) performs IP address reacquisition processing at a predetermined time interval irrespective of whether or not a DHCP OFFER packet has been normally acquired. Therefore, onceacquisition of an IP address fails when connection is made to a network, a user has to wait for the predetermined time interval before communication starts, which may be inconvenient for the user.

However, if a DHCP OFFER packet can be acquired, it is possible to normally communicate with the DHCP server 30 and to normally acquire an IP address by sending a DHCP REQUEST packet immediately in many cases. That is, the address reacquisition unit 180 can acquire an IP address more quickly by sending a DHCP REQUEST packet to the DHCP server 30 before the operating system sends an IP address reacquisition request to the DHCP server 30.

On the other hand, if the address assignment control unit 120 cannot acquire a DHCP OFFER packet (S530 : NO), then the inquirypacket sending unit 130 sends an ARP packet for inquiring about a MAC address corresponding to the IP address of the router 40, to the router 40 (S570). For example, when connecting to a network to which the network switch 20 is not connected, the information processor 10 starts communication with the use of an IP address preset for the information processor 10 and an IP address preset as a default gateway. In this case, the inquiry packet sending unit 130 may inquire about a MAC address corresponding to the IP address preset as a default gateway with the use of an ARP packet.

Then, the identification information acquisition unit 140 acquires the MAC address of the router 40 as a response to the ARP packet (S580). Thereby, since the router 40 is connected to the network in many cases, the information processor 10 can acquire a MAC address more certainly even if the network switch 20 or the DHCP server 30 is not connected to the network.

Instead of the processing described above, the information processor 10 may detect network devices connected to the network by sequentially inquiring, for each of the multiple MAC addresses stored in the location profile DB155, about an IP address corresponding to the MAC address by means of a RARP (Reverse ARP) command. In this case, it is possible to detect the network devices more certainly though a certain degree of time is required for the detection thereof.

The identification information acquisition unit 140 may acquire a MAC address from each of the multiple network devices in parallel. That is, the identification information acquisition unit 140 may perform acquisition of an STP packet, sending of a DHCP DISCOVER packet and sending of an ARP packet in parallel. In this case, the network setting unit 150 may set setting information associated with a MAC address acquired earliest after connection to the network is detected by the connection detection unit 100. Thereby, itispossible to enhance the possibility of acquiring a MAC address more quickly though the processing of sending information to the outside is inevitably required.

As shown in the figure, the information processor 10 sequentially processes means so that such means as is capable of acquiring a MAC address more quickly and sending less amount of information is processed prior to the other means. For example, acquisition of an STP packet, sending of a DHCP DISCOVER packet and sending of an ARP packet are performed in that order. Thereby, if an STP packet can be acquired, a MAC address can be acquired quickly without necessity of sending information to the network at all. Even if an STP packet cannot be acquired, a MAC address can be certainly acquired.

If a MAC address can be acquired by acquisition of an STP packet or sending of a DHCP DISCOVER packet, the information processor 10 can complete network setting prior to acquisition of an IP address. Thereby, unlike the case of making settings for network security after acquisition of an IP address, it is possible to prevent communication from being started without completion of security settings, and consequently, communication is less subject to attacks from the outside.

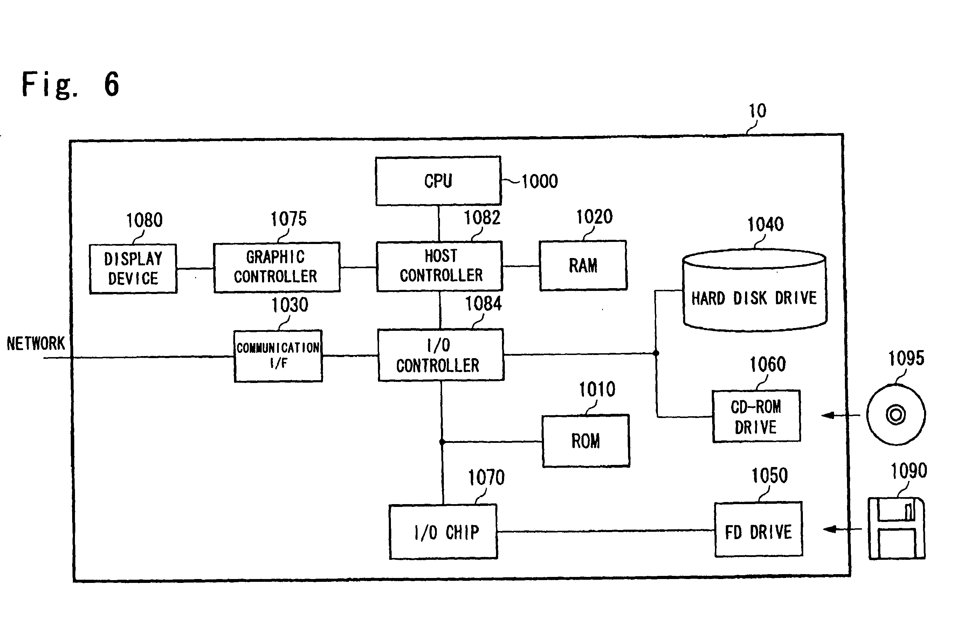

Figure 6 shows an example of the hardware configuration of the information processor 10. The information processor 10 is provided with a CPU peripheral part having a CPU 1000, a RAM 1020, a graphic controller 1075 and a display device 1080 which are mutually connected via a host controller 1082 ; an input/output part having a communication interface 1030, a hard disk drive 1040 and a CD-ROM drive 1060 which are connected to the host controller 1082 via an input/output controller 1084; and a legacy input/output part having a ROM 1010, a flexible disk drive 1050 and an input/output chip 1070 which are connected to the input/output controller 1084.

The host controller 1082 connects the RAM 1020 to the CPU 1000 and the graphic controller 1075 which access the RAM 1020 at a high transfer rate. The CPU 1000 operates based on programs stored in the ROM 1010 and the RAM 1020 to control each part. The graphic controller 1075 acquires image data generated by the CPU 1000 or the like on a frame buffer provided in the RAM 1020, and displays it on a display device 1080. Alternatively, the graphic controller 1075 may include a frame buffer for storing image data generated by the CPU 1000 and the like, inside it.

The input/output controller 1084 connects the host controller 1082 to the communication interface 1030, the hard disk drive 1040 and the CD-ROM drive 1060 which are relatively high speed input/output devices. The communication interface 1030 communicates with an external device via a network such as an Ethernet (registeredtrademark) network. The hard disk drive 1040 stores programs and data to be used by the information processor 10. The CD-ROM drive 1060 reads a program or data from a CD-ROM 1095 and provides it to the input/output chip 1070 via the RAM 1020.

The ROM 1010 and relatively low speed input/output devices, such as the flexible disk drive 1050 and the input/output chip 1070, are connected to the input/output controller 1084. The ROM 1010 stores a boot program, which is executed by the CPU 1000 when the information processor 10 is activated, and programs dependent on the hardware of the information processor 10. The flexible disk drive 1050 reads a program or data from a flexible disk 1090 and provides it to the input/output chip 1070 via the RAM 1020. The input/output chip 1070 connects the flexible disk 1090 or connects various input/output devices, for example, via a parallel port, a serial port, a keyboard port, a mouse port or the like.

A program to be provided for the information processor 10 is stored in a recording medium such as the flexible disk 1090, the CD-ROM 1095 and an IC card, and provided by a user. The program is read from the recording medium via the input/output chip 1070 and/or the input/output controller 1084 , installedin the information processor 10 and executed.

The program to be installed in the information processor 10 and executed includes a connection detection module, an STP packet acquisition module, an address assignment control module, an inquiry packet sending module, an identification information acquisition module, a network setting module, a setting information selection module, a failure detection module and an address reacquisition module. The program may use the hard disk drive 1040 as the location profile DB 155. The operation which each module causes the information processor 10 to perform is the same as the operation of a corresponding member in the information processor 10 described through Figures 1 to 5, and therefore, description thereof will be omitted.

The program or the modules described above may be stored in an external storage medium. As the storage medium, an optical recording medium such as a DVD and a PD, a magneto-optic recording medium such as an MD, a tape medium, and a semiconductor memory such as an IC card may be used, in addition to the flexible disk 1090 and the CD-ROM 1095. It is also possible to use a storage device such as a hard disk and an RAM provided for a server system connected to a dedicated communication network or the Internet to provide the program to the information processor 10 via the network.

The present invention has been described with the use of an embodiment. However, the technical scope of the present invention is not limited to the range described in the above embodiment. It is apparent to those skilled in the art that various modifications or improvements can be made to the embodiment described above. It is apparent from the description of the Claims that such modified or improved embodiments can be included in the technical scope of the present invention.

As shown in the above embodiment, no matter whether connection is made to a wired network or a wireless network, the information processor 10 can appropriately change network settings based on the MAC address of a network device in the connected network. Furthermore, by sequentially performs processing means in order in which such means as is capable of acquiring a MAC address more quickly is prior to the other means, the information processor 10 can acquire a MAC address as quickly and certainly as possible.

## Claims

1. An information processor for connecting to any of multiple networks (50) to perform communication, comprising:
i) a setting information storage unit (155) for storing, for each of the multiple networks, a setting information indicating a network setting to be set for the information processor (10) in the case of performing communication via the network, in association with a device identification information, MAC, specific to each of a network switch (20), a DHCP server (30) and a router (40), identifying a network device connected to the network;
ii) an identification information acquisition unit (140) for acquiring the device identification information identifying the network device, from each of the multiple network devices in the network to which the information processor is connected; and,
iii) a network setting unit (150) for causing the information processor to perform communication by acquiring the setting information which is associated with the device identification information acquired from at least one of the multiple network devices, from the setting information storage unit (155), and setting the setting information for the information processor.

2. The information processor according to Claim 1, further comprising:
i) a connection detection unit (100) for detecting that the information processor (10) has been connected to the network (50); wherein:
ii) the network setting unit (150) selects setting information associated with device identification information, MAC, acquired earliest after connection to the network is detected by the connection detection unit, from the setting information storage unit (155), and sets the setting information.

3. The information processor according to Claim 1 or Claim 2, further comprising:
i) a route setting packet acquisition unit (110) for acquiring a route setting packet, STP, which is sent by the network switch (20) connected to the network (50) to which the Information processor (10) is connected, for setting a route to be used by the network device to communicate with another device; wherein:
the identification information acquisition unit (140) acquires the device identification information, MAC, identifying a network device which has sent the route setting packet, from among the data in the acquired route setting packet.

4. The information processor according to Claim 3, wherein each of the multiple network devices connected to a network (50) communicates with another device using both of a device identification information, MAC, specific to the network device and an address, IP, assigned to identify the network device within the network.

5. The information processor according to Claim 4, comprising:
i) an address assignment control unit (120) for, if the route setting packet acquisition unit (110) fails in acquisition of the route setting packet, STP, acquiring an offer packet, DHCP OFFER, indicating that the address, IP, can be provided, from an assignment server (30) by sending an assignment Server detection packet, DHCP DISCOVER, for detecting an assignment server (30) which assigns the address to a device newly connected to the network (50), to at least one network device connected to the network to which the information processor (10) is connected; wherein:
ii) the identification information acquisition unit (140) acquires information identifying the assignment Server which has sent the offer packet among the data in the offer packet acquired by the address assignment control unit as the device identification information, MAC.

6. The information processor according to Claim 5, comprising an address reacquisition unit (180) for, if the address assignment control unit (120) acquires the offer packet, DHCP OFFER, and fails acquisition of the address, IP, from the assignment Server (30), sending a request, DHCP REQUEST, to reacquire the address to the assignment Server before the operating System of the information processor (10) sends a request to reacquire the address to the assignment server.

7. The information processor according to any of Claims 1 to 6, comprising:
i) a setting information selection unit (160) for causing a user to select setting information to be set for the information processor (10) from among the setting information stored in the setting information storage unit (155); wherein:
ii) the setting information storage unit stores the setting information set by the setting information selection unit in association with the device identification information, MAC, acquired by the identification information acquisition unit (140).

8. The information processor according to Claim 7, wherein if the setting information storage unit (155) already stores the setting information selected by the setting information selection unit (160) in association with device identification information, MAC, the setting information storage unit:
i) further stores the setting information in association with the device identification information, MAC, acquired by the identification information acquisition unit (140); or,
ii) stores the setting information in association with the device identification information acquired by the identification information acquisition unit instead of the device identification information already stored in association with the setting information.

9. The information processor according to any of Claims 1 to 8, comprising:
i) a connection detection unit (100) for detecting that a network cable for connecting to a network (50) for communication has been connected to the information processor (100); wherein:
ii) if the connection detection unit detects connection of the network cable, the identification information acquisition unit (140) acquires the device identification information, MAC, from each of the network switch (20), the DHCP server (30) and the router (40).

10. The information processor according to any of Claims 1 to 9, comprising:
i) a failure detection unit (170) for detecting a failure in communication using the setting information set by the network setting unit (150); wherein:
ii) if a failure is detected by the failure detection unit, the network setting unit sets setting information associated with device identification information, MAC, acquired from another network device in the network (50) to which the information processor (10) is connected, for the information processor.

11. The information processor according to any of Claims 1 to 10, comprising:
i) an inquiry packet sending unit (130) for sending, to at least one network device connected to a network (50), an inquiry packet, ARP, for inquiring about the device identification information, MAC, corresponding to the address of the network device; wherein:
ii) the identification information acquisition unit (10) acquires device identification information as a response to the inquiry packet.

12. A program for causing an information processor for connecting to any of multiple networks to perform communication to:
store in a setting information storage unit (155), for each of the multiple networks, a setting information indicating network settings to be set for the information processor (10) in the case of performing communication via the network, in association with a device identification information, MAC, specific to a network switch (20), a DHCP server (30) and a router (40), identifying network devices connected to the network;
acquire in an identification information acquisition unit (140) the device identification information identifying the network device from each of the multiple network devices in a network to which the information processor is connected; and
cause in a network setting unit (150) the information processor to perform communication by acquiring the setting information which is associated with the device identification information acquired from at least one of the multiple network devices, from the setting information storage unit (155), and set the setting information for the information processor (10).

13. The program according to claim 12 for causing an information processor for connecting to any of multiple networks to perform communication to further:
acquire in a route setting packet acquisition unit (110) a route setting packet, STP, which is sent by the network switch (20) connected to the network to which the information processor (10) is connected, for setting a route to be used by the network device to communicate with another device; and
acquire in an identification information acquisition unit (140) the device identification information, MAC, identifying a network device which has sent the route setting packet, from among the data in the route setting packet acquired by the route setting packet acquisition unit (110).

14. The program according to claim 12 for causing an information processor (10) for connecting to any of multiple networks, in which communication is performed with the use of a device identification information, MAC, specific to a network device and an address, IP, assigned to identify the network device within the network, to perform communication, to further:
acquire in an address assignment control unit (120) from the assignment server (30) an offer packet, DHCP OFFER, indicating that the address can be provided by sending an assignment server detection packet for detecting an assignment server which assigns the address to a device newly connected to the network (50), to at least one network device within the network (50) to which the information processor (10) is connected;
acquire in an identification information acquisition unit (140) the device identification information identifying the assignment server (30) which has sent the offer packet, from among the data in the offer packet acquired by the address assignment control unit (120).

15. A recording medium in which the program according to any of Claims 12 to 14 is recorded.

16. A control method for controlling an information processor (10) for connecting to any of multiple networks to perform communication, comprising the steps of:
storing, for each of the multiple networks, a setting information indicating network settings to be set for the information processor (10) in the case of performing communication via the network, in association with a device identification information, MAC, specific to the network devices (20, 30, 40), identifying network devices connected to the network (50);
acquiring the device identification information identifying the network device, from each of a network switch (20), a DHCP server (30) and a router (40) in a network (50) to which the information processor (10) is connected; and
causing the information processor (10) to perform communication by acquiring the setting information which is associated with device identification information acquired from at least one of the multiple network devices, from the data stored at the setting information storing step, and
setting the setting information for the information processor (10).

17. A control method according to claim 16, further comprising the steps of:
acquiring a route setting packet, which is sent by the network switch (20) connected to the network (50) to which the information processor is connected, for setting a route to be used by the network device to communicate with another device;
acquiring the device identification information, MAC, identifying a network device which has sent the route setting packet, from among the data in the route setting packet acquired at the route setting packet acquiring step.

18. The control method according to claim 16, wherein:
each of multiple network devices connected to a network (50) communicates with another device using both of a device identification information, MAC, specific to the network device and an address, IP, assigned to identify the network device within the network (50); and the method comprises the steps of:
storing, for each of the multiple networks, a setting information indicating network settings to be set for the information processor (10) in the case of performing communication via the network, in association with the device identification information about network devices connected to the network (50);
acquiring an offer packet, DHCP OFFER, indicating that the address can be provided, from the assignment server (30) by sending an assignment server detection packet, DHCO DISCOVER, for detecting an assignment server (30) which assigns the address to a device newly connected to the network (50), to at least one network device within the network (50) to which the information processor (10) is connected;
acquiring the device identification information identifying the assignment server (30) which has sent the offer packet, from among the data in the offer packet acquired at the address assignment acquiring step.

## Patentansprüche

1. Informationsprozessor zum Verbinden mit beliebigen Mehrfach-Netzwerken (50) zwecks Kommunikation, umfassend:
i) eine Speichereinheit (155) für Einstellinformation zum Speichern von Einstellinformation für die jeweiligen Netzwerke, die eine zu setzende Netzwerkeinstellung für den Informationsprozessor (10) im Fall der Kommunikation über das betreffende Netzwerk andeutet, in Verbindung mit einer Gerätekenninformation, MAC, spezifisch für jeden Netzwerkschalter (20), einem DHCP-Server (30) und einem Router (40), zur Identifizierung eines an das Netzwerk angeschlossenen Netzwerkgeräts;
ii) eine Erfassungseinheit (140) für Kenninformation zur Erfassung der das Netzwerkgerät identifizierenden Gerätekenninformation aus allen Mehrfach-Netzwerkgeräten im Netzwerk, an das der Informationsprozessor angeschlossen ist; und
iii) eine Netzwerkeinstelleinheit (150) zur Veranlassung des Informationsprozessors zur Kommunikation durch Erfassen der Einstellinformation, die mit der aus mindestens einem der Mehrfach-Netzwerkgeräte erfassten Geräteinformation verbunden ist, aus der Speichereinheit (155) für Einstellinformation und zum Setzen der Einstellinformation für den Informationsprozessor.

2. Informationsprozessor nach Anspruch 1, weiter umfassend:
i) eine Verbindungsdetektionseinheit (100) zum Nachweis, dass der Informationsprozessor (10) an das Netzwerk (50) angeschlossen ist; wobei
ii) die Netzwerkeinstelleinheit (150) die Einstellinformation ansteuert, die mit derjenigen Gerätekenninformation, MAC, verbunden ist, die zuerst nach dem Anschluss an das Netzwerk von der Verbindungsdetektionseinheit aus der Speichereinheit (155) für Einstellinformation nachgewiesen wurde, und die Einstellinformation setzt.

3. Informationsprozessor nach Anspruch 1 oder 2, weiter umfassend:
i) eine Erfassungseinheit (110) für ein Leitwegeinstellpaket zur Erfassung eines Leitwegeinstellpakets, STP, das von dem an das Netzwerk (50), an das der Informationsprozessor (10) angeschlossen ist, angeschlossenen Netzwerkschalter (20) gesendet wird, zur Einstellung eines vom Netzwerkgerät bei der Kommunikation mit einem anderen Gerät zu verwendenden Leitwegs; wobei
die Erfassungseinheit (140) für Kenninformation die Gerätekenninformation, MAC, die ein Netzwerkgerät, das das Leitwegeinstellpaket gesendet hat, aus den im Leitwegeinstellpaket erfassten Daten identifiziert, erfasst.

4. Informationsprozessor nach Anspruch 3, wobei ein jedes der an ein Netzwerk (50) angeschlossenen Mehrfach-Netzwerkgeräte unter Anwendung einer Gerätekenninformation, MAC, spezifisch für das jeweilige Netzwerkgerät, und einer Adresse, IP, die zur Identifizierung des jeweiligen Netzwerkgeräts innerhalb des Netzwerks bestimmt ist, mit einem anderen Gerät kommuniziert.

5. Informationsprozessor nach Anspruch 4, umfassend:
i) eine Steuereinheit (120) für Adressenzuordnung zur Erfassung - falls die Erfassungseinheit (110) für das Leitwegeinstellpaket das Leitwegeinstellpaket, STP, nicht erfasst - eines Anbietepakets, DHCP OFFER, das angibt, dass die Adresse, IP, von einem Zuordnungsserver (30) durch Senden eines Zuordnungsserver-Detektionspakets, DHCP DISCOVER, an mindestens ein an das Netzwerk, an das der Informationsprozessor (10) angeschlossen ist, angeschlossenes Netzwerkgerät zur Detektion eines Zuordnungsservers (30) bereitgestellt werden kann, der die Adresse einem neu an das Netzwerk (50) angeschlossenen Gerät zuordnet; wobei
ii) die Erfassungseinheit (140) für Kenninformation Information erfasst, die den Zuordnungsserver (30), der das Anbietepaket gesendet hat, unter den Daten im Anbietepaket, die von der Steuereinheit für Adressenzuordnung als Gerätekenninformation, MAC, erfasst wurden, identifiziert.

6. Informationsprozessor nach Anspruch 5, umfassend eine Adressen-Wiedererfassungseinheit (180) zum Senden - falls die Steuereinheit (120) für Adressenzuweisung das Anbietepaket, DHCP OFFER, erfasst und die Adresse, IP, vom Zuordnungsserver (30) nicht erfasst - einer Anforderung, DHCP REQUEST, zur Wiedererfassung der Adresse an den Zuordnungsserver (30), bevor das Betriebssystem des Informationsprozessors (10) eine Anforderung zur Wiedererfassung der Adresse an den Zuordnungsserver sendet.

7. Informationsprozessor nach einem der Ansprüche 1 bis 6, umfassend:
i) eine Auswahleinheit (160) für Einstellinformation zur Veranlassung eines Benutzers zur Auswahl von Einstellinformation für den Informationsprozessor (10) aus der in der Speichereinheit (155) für Einstellinformation gespeicherten Einstellinformation; wobei:
ii) die Speichereinheit für Einstellinformation die von der Auswahleinheit für Einstellinformation gesetzte Einstellinformation in Verbindung mit der von der Erfassungseinheit (140) für Kenninformation erfassten Gerätekenninformation, MAC, speichert.

8. Informationsprozessor nach Anspruch 7, wobei - falls die Speichereinheit (155) für Einstellinformation die von der Auswahleinheit (160) für Einstellinformation ausgewählte Einstellinformation in Verbindung mit der Gerätekenninformation, MAC, bereits speichert - die Speichereinheit für Einstellinformation:
i) die Einstellinformation in Verbindung mit der von der Erfassungseinheit (140) für Kenninformation erfassten Gerätekenninformation, MAC, weiter speichert; oder
ii) die Einstellinformation in Verbindung mit der von der Erfassungseinheit für Kenninformation erfassten Gerätekenninformation anstatt der bereits in Verbindung mit der Einstellinformation gespeicherten Gerätekenninformation speichert.

9. Informationsprozessor nach einem der Ansprüche 1 bis 8, umfassend:
i) eine Verbindungsdetektionseinheit (100) zum Nachweis, dass ein Netzkabel zum Anschließen eines Netzwerks (50) für Kommunikation an den Informationsprozessor (100) angeschlossen wurde; wobei
ii) wenn die Verbindungsdetektionseinheit den Anschluss des Netzkabels nachweist, die Erfassungseinheit (140) für Kenninformation die Gerätekenninformation, MAC, von allen Netzwerkschaltern (20), von DHCP-Server (30) und vom Router (40) erfasst.

10. Informationsprozessor nach einem der Ansprüche 1 bis 9, umfassend:
i) eine Ausfalldetektionseinheit (170) zur Detektion eines Kommunikationsausfalls unter Anwendung der von der Netzwerkeinstelleinheit (150) gesetzten Einstellinformation; wobei
ii) wenn die Ausfalldetektionseinheit einen Ausfall nachweist, die Netzwerkeinstelleinheit die Einstellinformation, die mit der Gerätekenninformation, MAC, verbunden ist, die aus einem anderen Netzwerkgerät in dem Netzwerk (50) erfasst wurde, an das der Informationsprozessor (10) angeschlossen ist, setzt.

11. Informationsprozessor nach einem der Ansprüche 1 bis 10, umfassend:
i) eine Sendeeinheit (130) für Abfragepakete zum Senden eines Abfragepakets, ARP, zur Abfrage über die der Adresse des Netzwerkgeräts entsprechende Gerätekenninformation, MAC, an mindestens ein an ein Netzwerk (50) angeschlossenes Netzwerkgerät; wobei:
ii) die Erfassungseinheit (140) für Kenninformation Gerätekenninformation auf Erhalt des Abfragepakets erfasst.

12. Programm zur Veranlassung eines Informationsprozessors zur Verbindung mit beliebigen Mehrfach-Netzwerken für Kommunikation zwecks:
Speichern, in einer Speichereinheit (155) für Einstellinformation, von Einstellinformation für die jeweiligen Netzwerke, die zu setzende Netzwerkeinstellungen für den Informationsprozessor (10) im Fall der Kommunikation über das betreffende Netzwerk andeutet, in Verbindung mit Gerätekenninformation, MAC, spezifisch für jeden Netzwerkschalter (20), einem DHCP-Server (30) und einem Router (40), zur Identifizierung eines an das Netzwerk angeschlossenen Netzwerkgeräts;
Erfassen, in einer Erfassungseinheit (140) für Kenninformation, der das Netzwerkgerät identifizierenden Gerätekenninformation aus allen Mehrfach-Netzwerkgeräten in einem Netzwerk, an das der Informationsprozessor angeschlossen ist; und
Veranlassen des Informationsprozessors, in einer Netzwerkeinstelleinheit (150), zur Kommunikation durch Erfassen der Einstellinformation, die mit der von mindestens einem der Mehrfach-Netzwerkgeräte erfassten Geräteinformation verbunden ist, aus der Speichereinheit (155) für Einstellinformation und zum Setzen der Einstellinformation für den Informationsprozessor (10).

13. Programm nach Anspruch 12 zur Veranlassung eines Informationsprozessors zur Verbindung mit beliebigen Mehrfach-Netzwerken für Kommunikation, weiter zwecks:
Erfassen, in einer Erfassungseinheit (110) für ein Leitwegeinstellpaket, eines Leitwegeinstellpakets, STP, das von dem an das Netzwerk, an das der Informationsprozessor (10) angeschlossen ist, angeschlossenen Netzwerkschalter (20) gesendet wird, zur Einstellung eines vom Netzwerkgerät bei der Kommunikation mit einem anderen Gerät zu verwendenden Leitwegs; und
Erfassen, in einer Erfassungseinheit (140) für Kenninformation, der Gerätekenninformation, MAC, die ein Netzwerkgerät, das das Leitwegeinstellpaket gesendet hat, aus den im Leitwegeinstellpaket von der Erfassungseinheit (110) für das Leitwegeinstellpaket erfassten Daten identifiziert.

14. Programm nach Anspruch 12 zur Veranlassung eines Informationsprozessors zur Verbindung mit beliebigen Mehrfach-Netzwerken, in denen Kommunikation unter Anwendung einer Gerätekenninformation, MAC, spezifisch für ein Netzwerkgerät, und einer das Netzwerkgerät innerhalb des Netzwerks identifizierenden Adresse, IP, durchgeführt wird, für Kommunikation, weiter zwecks:
Erfassen, in einer Steuereinheit (120) für Adressenzuordnung, eines Anbietepakets, DHCP OFFER, vom Zuordnungsserver (30), das angibt, dass die Adresse, IP, durch Senden eines Zuordnungsserver-Detektionspakets zur Detektion eines Zuordnungsservers, der die Adresse einem neu an das Netzwerk (50) angeschlossenen Gerät zuordnet, an mindestens ein an das Netzwerk, an das der Informationsprozessor (10) angeschlossen ist, angeschlossenes Netzwerkgerät bereitgestellt werden kann;
Erfassen, in einer Erfassungseinheit (140) für Kenninformation, der den Zuordnungsserver (30), der das Anbietepaket gesendet hat, identifizierenden Gerätekenninformation aus den Daten in dem von der Steuereinheit (120) für Adressenzuordnung erfassten Anbietepaket.

15. Datenträger zur Speicherung des Programms nach einem der Ansprüche 12 bis 14.

16. Steuerverfahren zur Steuerung eines Informationsprozessors (10) zum Verbinden mit beliebigen Mehrfach-Netzwerken zwecks Kommunikation, umfassend die folgenden Schritte:
das Speichern, für alle Mehrfach-Netzwerke, einer Einstellinformation, die eine zu setzende Netzwerkeinstellung für den Informationsprozessor (10) im Fall der Kommunikation über das betreffende Netzwerk andeutet, in Verbindung mit Gerätekenninformation, MAC, spezifisch für jeden Netzwerkschalter (20, 30, 40), die die an das Netzwerk (50) angeschlossenen Netzwerkgeräte identifiziert;
das Erfassen der das Netzwerk identifizierenden Gerätekenninformation aus einem Netzwerkschalter (20), einem DHCP-Server (30) und einem Router (40) in einem Netzwerk (50), an das der Informationsprozessor (10) angeschlossen ist; und
die Veranlassung des Informationsprozessors (10) zur Kommunikation durch Erfassen der Einstellinformation, die mit der aus mindestens einem der Mehrfach-Netzwerkgeräte erfassten Information verbunden ist, aus den bei der Speicherung der Einstellinformation gespeicherten Daten; und das Setzen der Einstellinformation für den Informationsprozessor (10).

17. Steuerverfahren nach Anspruch 16, weiter umfassend die folgenden Schritte:
das Erfassen eines Leitwegeinstellpakets, das von dem Netzwerkschalter (20) gesendet wird, der an das Netzwerk (50), an das der Informationsprozessor angeschlossen ist, angeschlossen ist, zur Einstellung eines vom Netzwerkgerät bei der Kommunikation mit einem anderen Netzwerkgerät zu verwendenden Leitwegs;
das Erfassen der Gerätekenninformation, MAC, die ein Netzwerkgerät, das das Leitwegeinstellpaket gesendet hat, aus den Daten im Leitwegeinstellpaket, die bei der Erfassung des Leitwegeinstellpakets erfasst wurden, identifiziert.

18. Steuerverfahren nach Anspruch 16, wobei:
die an ein Netzwerk (50) angeschlossenen Netzwerkgeräte jeweils unter Anwendung einer Gerätekenninformation, MAC, spezifisch für das jeweilige Netzwerkgerät, und einer Adresse, IP, die zur Identifizierung des jeweiligen Netzwerkgeräts innerhalb des Netzwerks bestimmt ist, mit einem anderen Gerät kommuniziert; und wobei das Verfahren die folgenden Schritte umfasst:
das Speichern, für alle Mehrfach-Netzwerke, einer Einstellinformation, die zu setzende Netzwerkeinstellungen für den Informationsprozessor (10) im Fall der Kommunikation über das betreffende Netzwerk andeutet, in Verbindung mit der Gerätekenninformation über an das Netzwerk (50) angeschlossene Netzwerkgeräte;
das Erfassen eines Anbietepakets, DHCP OFFER, das angibt, dass die Adresse vom Zuordnungsserver (30) durch Senden eines Zuordnungsserver-Detektionspakets, DHCP DISCOVER, an mindestens ein Netzwerkgerät in dem Netzwerk (50), an das der Informationsprozessor (10) angeschlossen ist, zur Detektion eines Zuordnungsservers (30) bereitgestellt werden kann, der die Adresse einem neu an das Netzwerk (50) angeschlossenen Gerät zuordnet;
das Erfassen der Gerätekenninformation, die den Zuordnungsserver (30), der das Anbietepaket gesendet hat, identifiziert, aus den bei der Erfassung der Adressenzuordnung erfassten Daten im Anbietepaket.

## Revendications

1. Machine de traitement de l'information destinée à se connecter à l'un quelconque parmi de multiples réseaux (50) pour établir une communication, comprenant :
i) une unité de stockage d'information de réglage (155) destinée à stocker, pour chacun des multiples réseaux, une information de réglage indiquant un réglage de réseau devant être réglé pour la machine de traitement de l'information (10) en cas de communication par l'intermédiaire du réseau, en association avec une information d'identification de dispositif, MAC, spécifique à chacun parmi un autocommutateur (20), un serveur DHCP (30) et un router (40), identifiant le dispositif de réseau connecté au réseau ;
ii) une unité d'acquisition d'information d'identification (140) destinée à acquérir l'information d'identification de dispositif identifiant le dispositif de réseau, à partir de chacun parmi de multiples dispositifs de réseau dans le réseau auquel la machine de traitement de l'information est connectée ; et,
iii) une unité de réglage de réseau (150) destinée à amener la machine de traitement de l'information à établir une communication en acquérant l'information de réglage qui est associée à l'information d'identification de dispositif acquise par au moins un parmi les multiples dispositifs de réseau, par l'unité de stockage d'information de réglage (155), et à régler l'information de réglage pour la machine de traitement de l'information.

2. Machine de traitement de l'information selon la revendication 1 comprenant en outre :
i) une unité de détection de connexion (100) destinée à détecter que la machine de traitement de l'information (10) est connectée au réseau (50) :
ii) l'unité de réglage de réseau (150) sélectionnant une information de réglage associée à l'information d'identification de dispositif, MAC, acquise en premier après que la connexion au réseau a été détectée par l'unité de détection de connexion, à partir de l'unité de stockage d'information de réglage (155), et réglant l'information de réglage.

3. Machine de traitement de l'information selon la revendication 1 ou la revendication 2, comprenant en outre :
i) une unité d'acquisition de paquet de définition de chemin (110) destinée à acquérir un paquet de définition de chemin, STP, qui est envoyé par l'autocommutateur (20) connecté au réseau (50) auquel la machine de traitement de l'information (10) est connectée, destinée à définir un chemin devant être utilisé par le dispositif de réseau afin de communiquer avec un autre dispositif ;
l'unité d'acquisition d'information d'identification (140) acquérant l'information d'identification de dispositif, MAC, identifiant un dispositif de réseau qui a envoyé le paquet de définition de chemin, à partir des données dans le paquet de définition de chemin acquis.

4. Machine de traitement de l'information selon la revendication 3, chacun des multiples dispositifs de réseau connectés au réseau (50) communiquant avec un autre dispositif utilisant à la fois une information d'identification de dispositif, MAC, spécifique au dispositif de réseau et une adresse, IP, attribuée afin d'identifier le dispositif de réseau à l'intérieur du réseau.

5. Machine de traitement de l'information selon la revendication 4 comprenant :
i) une unité de commande d'attribution d'adresse (120) pour - si l'unité d'acquisition de paquet de définition de chemin (110) ne parvient pas à acquérir le paquet de définition de chemin, STP, acquérir un paquet d'offre, DHCP OFFER, indiquant que l'adresse, IP, peut être fournie, par un serveur d'attribution (30) en envoyant un paquet de détection de serveur d'attribution, DHCP DISCOVER, destiné à détecter un serveur d'attribution (30) qui attribue l'adresse à un dispositif récemment connecté au réseau (50), à au moins un dispositif de réseau connecté au réseau auquel la machine de traitement de l'information (10) est connectée ;
ii) l'unité d'acquisition d'information d'identification (140) acquérant une information identifiant le serveur d'attribution qui a envoyé le paquet d'offre parmi les données dans le paquet d'offre acquis par l'unité de commande d'attribution d'adresse comme l'information d'identification de dispositif, MAC.

6. Machine de traitement de l'information selon la revendication 5, comprenant une unité d'acquisition d'adresse (180) destinée à, si l'unité de commande d'attribution d'adresse (120) acquiert le paquet d'offre, DHCOP OFFER, et ne parvient pas à acquérir l'adresse, IP, à partir du serveur d'attribution (30), envoyer une demande, DHCP REQUEST, pour acquérir une nouvelle fois l'adresse au serveur d'attribution avant que le système d'exploitation de la machine de traitement de l'information (10) n'envoie une demande pour acquérir une nouvelle fois l'adresse au serveur d'attribution.

7. Machine de traitement de l'information selon l'une quelconque des revendications 1 à 6, comprenant :
i) une unité de sélection d'information de réglage (160) destinée à amener un utilisation à sélectionner une information de réglage devant être réglée pour la machine de traitement de l'information (10) à partir de l'information de réglage stockée dans l'unité de stockage d'information de réglage (155) ;
ii) l'unité de stockage d'information de réglage stockant l'information de réglage réglée par l'unité de sélection d'information de réglage en association avec l'information d'identification de dispositif, MAC, acquises par l'unité d'acquisition d'information d'identification (140).

8. Machine de traitement de l'information selon la revendication 7, si l'unité de stockage d'information de réglage (155) a déjà stocké l'information de réglage sélectionnée par l'unité de sélection d'information de réglage (160) en association avec l'information d'identification de dispositif, MAC, l'unité de stockage d'information de réglage :
i) stockant en outre l'information de réglage en association avec l'information d'identification de dispositif, MAC, acquises par l'unité d'acquisition d'information d'identification (140) ; ou
ii) stockant l'information de réglage en association avec l'information d'identification de dispositif acquise par l'unité d'acquisition d'information d'identification à la place d'information d'identification de dispositif déjà stockée en association avec l'information de réglage.

9. Machine de traitement de l'information selon l'une quelconque des revendications 1 à 8, comprenant :
i) une unité de détection de connexion (100) destinée à détecter qu'un câble de réseau destiné à la connexion à un réseau (50) pour la communication a été connecté à la machine de traitement de l'information (100) ;
ii) si l'unité de détection de connexion détecte la connexion du câble de réseau, l'unité d'acquisition d'information d'identification (140) acquérant l'information d'identification de dispositif, MAC, à partir de chacun parmi l'autocommutateur (20), le serveur DHCP (30) et le router (40).

10. Machine de traitement de l'information selon l'une quelconque des revendications 1 à 9, comprenant :
i) une unité de détection de panne (170) destinée à détecter une panne de communication à l'aide d'information de réglage réglée par le réglage de réseau :
ii) si une panne est détectée par l'unité de détection de panne, l'unité de réglage de réseau réglant l'information de réglage associée à l'information d'identification de dispositif, MAC, acquise par un autre dispositif de réseau dans le réseau (50) auquel la machine de traitement de l'information (10) est connectée, pour la machine de traitement de l'information.

11. Machine de traitement de l'information selon l'une quelconque des revendications 1 à 10, comprenant :
i) une unité d'envoi de paquet d'interrogation (130) destinée à envoyer, à au moins un dispositif de réseau connecté à un réseau (50), un paquet d'interrogation, ARP, pour une interrogation concernant l'information d'identification de dispositif, MAC, correspondant l'adresse du dispositif de réseau ;
ii) l'unité d'acquisition d'information d'identification (10) acquérant l'information d'identification de dispositif en tant que réponse au paquet d'interrogation.

12. Programme amenant une machine de traitement de l'information destinée à se connecter à l'un quelconque parmi de multiples réseaux à établir une communication pour :
stocker dans une unité de stockage d'information de réglage (155), pour chacun parmi de multiples réseaux, une information de réglage indiquant des réglages de réseau devant être réglés pour la machine de traitement de l'information (10) en cas de communication par l'intermédiaire du réseau, en association avec une information d'identification de dispositif, MAC, spécifique à un autocommutateur (20), un serveur DHCP (30) et un router (40), identifiant des dispositifs de réseau connectés au réseau ;
acquérir dans une unité d'acquisition d'information d'identification (140) l'information d'identification de dispositif identifiant le dispositif de réseau à partir de chacun parmi les multiples dispositifs de réseau dans un réseau auquel la machine de traitement de l'information est connectée ; et
amener dans une unité de réglage de réseau (150) la machine de traitement de l'information à établir une communication en acquérant l'information de réglage qui est associée à l'information d'identification de dispositif acquise à partir d'au moins l'un parmi les multiples dispositifs de réseau, à partir de l'unité de stockage d'information de réglage (155), et régler l'information de réglage pour la machine de traitement de l'information (10).

13. Programme selon la revendication 12 destiné à amener une machine de traitement de l'information destinée à se connecter à l'un quelconque parmi de multiples réseaux à établir une communication pour en outre :
acquérir dans une unité d'acquisition de paquet de définition de chemin (110) un paquet de définition de chemin, STP, qui est envoyé par l'autocommutateur (20) connecté au réseau (50) auquel la machine de traitement de l'information (10) est connectée, destinée à définir un chemin devant être utilisé par le dispositif de réseau afin de communiquer avec un autre dispositif ; et
acquérir dans une unité d'acquisition d'information d'identification (140) l'information d'identification de dispositif, MAC, identifiant un dispositif de réseau qui a envoyé le paquet de définition de chemin, à partir des données dans le paquet de définition de chemin acquises par l'unité d'acquisition de paquet de définition de chemin (110).

14. Programme selon la revendication 12, destiné à amener une machine de traitement de l'information (10) destinée à se connecter à l'un quelconque des multiples réseaux, dans lesquels la communication est établie à l'aide d'une information d'identification de dispositif, MAC, spécifique à un dispositif de réseau et une adresse, IP, attribuée afin d'identifier le dispositif de réseau à l'intérieur du réseau, pour établir la communication, à en outre :
acquérir dans une unité de commande d'attribution d'adresse (120) par le serveur d'attribution (30) un paquet d'offre, indiquant que l'adresse peut être fournie par l'envoi d'un paquet de détection de serveur d'attribution destiné à détecter un serveur d'attribution qui attribue l'adresse à un dispositif récemment connecté au réseau (50), à au moins un dispositif de réseau à l'intérieur du réseau (50) auquel la machine de traitement de l'information (10) est connectée ;
acquérir dans une unité d'acquisition d'information d'identification (140) l'information d'identification de dispositif identifiant le serveur d'attribution (30) qui a envoyé le paquet d'offre, à partir des données dans le paquet d'offre acquis par l'unité de commande d'attribution d'adresse (120).

15. Support d'enregistrement dans lequel le programme selon l'une quelconque des revendications 12 à 14, est enregistré.

16. Procédé de commande destiné à commander une machine de traitement de l'information (10) destinée à se connecter à l'un quelconque parmi de multiples réseaux pour établir une communication, comprenant les étapes consistant à :
stocker, pour chacun des multiples réseaux, une information de réglage indiquant des réglages de réseau devant être réglés pour la machine de traitement de l'information (10) en cas d'établissement de communication par l'intermédiaire du réseau, en association d'une information d'identification de dispositif, MAC, spécifique aux dispositifs de réseau (20, 30, 40), identifiant des dispositifs de réseau connectés au réseau (50) ;
acquérir l'information d'identification de dispositif identifiant le dispositif de réseau, à partir de l'un parmi un autocommutateur (20), un serveur DHCP (30) et un router (40) dans un réseau (50) auquel la machine de traitement de l'information (10) est connectée ; et
amener la machine de traitement de l'information (10) à établir une communication en acquérant l'information de réglage qui est associée à l'information d'identification de dispositif acquise à partir d'au moins un parmi les multiples dispositifs de réseau, à partir des données stockées à l'étape de stockage d'information de réglage, et régler l'information de réglage pour la machine de traitement de l'information (10).

17. Procédé de commande selon la revendication 16, comprenant en outre les étapes consistant à :
acquérir un paquet de définition de chemin, qui est envoyé par l'autocommutateur (20) connecté au réseau (50) auquel la machine de traitement de l'information est connectée,
destiné à définir un chemin devant être utilisé par le dispositif de réseau afin de communiquer avec un autre dispositif ;
acquérir l'information d'identification de dispositif, MAC, identifiant un dispositif de réseau qui a envoyé le paquet de définition de chemin, à partir des données dans le paquet de définition de chemin acquis à l'étape d'acquisition de paquet de définition de chemin.

18. Procédé de commande selon la revendication 16 :
chacun des multiples dispositifs de réseau connectés à un réseau (50) communiquant avec un autre dispositif à l'aide à la fois d'une information d'identification de dispositif, MAC, spécifique au dispositif de réseau et une adresse, IP, attribuée afin d'identifier le dispositif de réseau à l'intérieur du réseau (50) ; et le procédé comprenant les étapes consistant à :
stocker, pour chacun des multiples réseaux, une information de réglage indiquant des réglages de réseau devant être réglés pour la machine de traitement de l'information (10) en cas d'établissement de communication par l'intermédiaire du réseau, en association avec l'information d'identification de dispositif concernant des dispositifs de réseau connectés au réseau (50) ;
acquérir un paquet d'offre, DHCP OFFER, indiquant que l'adresse peut être fournie par le serveur d'attribution (30) en envoyant un paquet de détection de serveur d'attribution, DHCO DISCOVER, destiné à détecter un serveur d'attribution (30) qui attribue l'adresse à un dispositif récemment connecté au réseau (50), à au moins un dispositif de réseau à l'intérieur du réseau (50) auquel la machine de traitement de l'information (10) est connectée ;
acquérir l'information d'identification de dispositif identifiant le serveur d'attribution (30) qui a envoyé le paquet d'offre, à partir des données dans le paquet d'offre acquises à l'étape d'acquisition d'attribution d'adresse.
